# EUROPEAN PATENT SPECIFICATION

(11) **EP 2 099 548 B1**
(45) Date of publication and mention of the grant of the patent: **20.11.2013**
(21) Application number: 07858319.2
(22) Date of filing: 18.12.2007
(51) Int. Cl.: B01D 46/04, B01D 46/02, B01D 46/24, B01D 47/06

(54) **METHOD AND APPARATUS FOR FILTERING PROCESS GAS**
VERFAHREN UND VORRICHTUNG ZUR FILTERUNG EINES PROZESSGASES
PROCÉDÉ ET APPAREIL DE FILTRATION DE GAZ DE TRAITEMENT

(30) Priority: 19.12.2006 FI 20061133; 11.12.2007 FI 20070961
(43) Date of publication of application: 16.09.2009
(73) Proprietor: Outotec Oyj, 02230 Espoo (FI)
(72) Inventor: JANKKILA, Martti, 95410 Kiviranta (FI); NIEMELÄ, Pekka, 95410 Kiviranta (FI); RANTALA, Pekka, 95450 Tornio (FI)
(74) Representative: K & H Bonapat
(86) International application number: PCT/FI2007/000295
(87) International publication number: WO 2008/074912

(56) References cited:
- EP-B1- 0 864 347
- DE-A1- 2 540 003
- DE-A1- 3 022 203
- GB-A- 672 458
- US-A- 5 112 585
- US-A- 6 149 716

## Description

The present invention relates to a method and an apparatus for filtering process gas created in the ferroalloy smelting process, i.e. carbon monoxide gas, in order to essentially reduce the quantity of solids contained in the gas.

In prior art it had been known according to document DE 30 22 203 A1 to turn a filter unit into a cleaning unit, in which filter cartouches were hung with open ends upwardly so that into the open ends air under pressure can be fed during cleaning, while from the outside of the filter elements the dirt is washed away by means of water jets. Further, according to US 5 112 585 A a process and apparatus for removing flue gas cleaning residues in a combustion system has been known. Therein, hot gas is fed through a filter chamber having filter elements which could be impinged with pressurized air for cleaning them. Within said filtering unit an injection pipe is further arranged to feed atomized washing liquid into the filtering chamber which liquid is enriched with salts. The salt particles then settle down on the surface of the filtering elements, so that clogging of the filter elements is prevented. At least, document US 6,149,716 A discloses a method for cleaning-in-place filter elements by means of cleaning gas during the operation of filtering. Said cleaning gas is supplied from both sides of the filter elements. Additionally, in between periods of filtering the cleaning effect can be enhanced by means of a cleaning liquid.

For cleaning exhaust gases created in metal smelting processes of solids, for instance for cleaning gases created in a ferroalloy smelting process, there is generally used a venturi scrubber. The solids bearing gas to be cleaned is conducted through the top part of the scrubber to a venturi scrubber, and a water jet is directed to the downwards proceeding gas flow. Owing to the water jet, solids contained in the gas are washed in the water, and the cleaned gas is conducted away from the venturi scrubber through a discharge aperture provided in the top part. In order to improve the solids separation capacity of a venturi scrubber, two or more venturi scrubbers can be installed in series, so that the gas to be cleaned is conducted through all scrubbers. However, even this method results in a purity level of only 50-200 mg/Nm³ which is not sufficient, in case the cleaned gas should be utilized without any problems in the various different process steps in ferroalloy production, or elsewhere in demanding targets.

Moreover, in the treatment of process gases, such as carbon monoxide gas created in a ferroalloy smelting process, it is also necessary to observe that carbon monoxide gas as such is dangerous. Therefore in the treatment of carbon monoxide gas, the requirements of safety at work and the surroundings must be carefully taken into account, so that essentially no amount of the carbon monoxide gas is allowed to escape to the surrounding working space.

The object of the present invention is to eliminate drawbacks of the prior art and to achieve an improved method and apparatus for cleaning solids from process gas, i.e. carbon monoxide gas created in a ferroalloy process, so that the process gas can be advantageously utilized for instance for heating in process steps preceding the smelting process and/or following the smelting process. The essential novel features of the inventive method are apparent from the appended claim 1. Advantageous embodiments arise from subclaims 2 to 6. The inventive filtering apparatus is defined in claim 6, while convenient embodiments of it are shown in respective subclaims.

The method and apparatus according to the invention for cleaning process gas, i.e. carbon monoxide gas created in the ferroalloy smelting process, is provided, preferably first with respect to the gas flow direction, with at least one gas scrubber known as such, where the separation of gas and solids is carried out preferably by a liquid medium. The cleaned process gas, i.e. carbon monoxide gas, is further conducted to at least one gas filtering unit, where the filtering is performed as dry separation. When desired, in between the gas scrubber and the gas filtering unit, there can be installed a gas blower, in which case the gas flowing rate between the scrubber and the filtering unit can be increased.

In an apparatus according to the invention, the gas filtering unit is formed of a filtering chamber with a cross-sectional surface that is preferably essentially round and essentially cylindrical in shape. A conical bottom part can be advantageously provided in the filtering chamber of the gas filtering unit. Thus the gas filtering unit also is made compact. In the flowing direction of the processed gas, at the first end of the cylindrical element or near the first end thereof, there is installed a conduit for feeding the gas to be processed to the filtering chamber, and at the other end of the cylindrical element or near the other end of the cylindrical element, there is installed a conduit for discharging gas from the filtering chamber. The filtering chamber is advantageously installed in an essentially vertical position, in which case in the lower part of the filtering chamber, or in a bottom part connected to the lower part thereof, there also is formed a discharge aperture for the solids separated from the gas. The cross-sectional surface of a filtering chamber according to the invention can also be essentially rectangular or for example oval-shaped.

According to the invention, inside the filtering chamber there are advantageously installed several filtering elements. It is also possible to install only one filtering element in the filtering chamber, in case the quantity of the processed gas is essentially small, but with respect to installing and maintaining elements, it is more advantageous to use several filtering elements in the chamber. The filtering elements are installed in the filtering chamber so that the filtering elements essentially cover the whole cross-sectional surface in the filtering chamber, or advantageously at least that part of the cross-sectional surface through which the gas to be processed in the filtering chamber is conducted from the filtering chamber inlet aperture to the outlet aperture. The filtering element is preferably made of a porous material, plastic or other such material, for example ceramic material, through which the gas to be cleaned can flow. Thus the solid material contained in the gas can be separated therefrom, because the passage of solids through the filtering element is prevented. The filtering element can also be made of metal.

In addition, the filtering chamber in a filtering unit according to the invention is provided with a conduit through which an inert gas used for cleaning the filtering elements, such as a nitrogen, is conducted, and with a conduit through which a liquid medium, such as water, used for removing the solids, separated from the filtering elements, from the filtering chamber, is conducted to the filtering chamber. At the ends connected to the filtering chamber, both conduits are provided with at least one nozzle, by which the material to be fed can be conducted in the desired direction. Thus the processing of solids takes place in the filtering chamber, partly as dry separation and partly as wet separation. The nozzle meant for feeding the inert gas is directed towards the filtering elements for removing the solids stuck on the surface of the filtering elements. The conduit for the gas used for cleaning the filtering elements is provided with a control unit, by which it is adjusted for instance the duration or strength of one blast of gas flowing through the conduit, as well as the frequency of the blast period.

The liquid medium, such as a water, used for discharging the solids stuck on the filtering elements from the filtering chamber is by means of the nozzles advantageously directed so that when using several nozzles, at least part of them are preferably pointed so that the liquid medium flowing through the nozzles is directed towards the solids detached from the filtering elements, from the filtering chamber walls, and part of the nozzles are pointed towards removing solids from the free space of the filtering chamber. The solids are removed by means of said medium either continuously or preferably in repeated periods. The slurry formed of the liquid medium and the solids separated from the gas are discharged from the filtering chamber through a slurry discharge aperture formed in the lower part of the chamber or in a bottom part connected to the filtering chamber.

The solids discharge aperture in the filtering chamber is connected to a discharge conduit, preferably a discharge pipe, which is provided, in the solids flowing direction, essentially near to the first end of the discharge conduit and thus to the end connected to the filtering chamber, by two blocking elements, one of them being installed in the immediate vicinity of the discharge aperture, and the other blocking element being installed at a distance from the first blocking element. The space left between the blocking elements in the discharge conduit constitutes the solids discharge chamber. The discharge chamber can also be a separate part with respect to the discharge conduit, provided with blocking elements, in which case the discharge conduit is connected to the discharge chamber. Now the discharge chamber is on one hand connected to the solids discharge aperture of the filtering chamber, and on the other hand to the discharge conduit, so that both the discharge aperture of the filtering chamber and the junction of the discharge conduit are provided with blocking elements. The blocking elements are made to function reciprocally, so that at least one of the blocking elements is always closed, when carbon monoxide gas to be cleaned flows through the filtering chamber. By means of the closed blocking element, the carbon monoxide gas is prevented from flowing from the discharge chamber to the discharge conduit or to the part provided in the discharge conduit in succession to the discharge chamber, and therethrough to the surrounding space. The discharge conduit is advantageously designed so that in the discharge conduit, there can be created a liquid seal, such as a water seal. The discharge conduit can also be connected to an element in which there can be created a liquid seal, such as a water seal. By means of liquid seal it is preferably prevented the access of carbon monoxide in the gaseous state to the free surrounding space.

The feeding of the liquid medium, as well as the operation of the blocking elements constituting the discharge chamber, are in the method according to the invention advantageously adjusted by the same control unit that also conducts the feeding of the inert gas into the filtering chamber. However, the feeding of inert gas and liquid medium as well as the operation of the discharge chamber blocking elements can also be adjusted through a separate control unit.

When an apparatus according to the invention is in operation and using the method of the invention, the gas obtained from a metal smelting process and containing solids-bearing exhaust gas, i.e. carbon monoxide gas, is first conducted to be cleaned in a venturi scrubber known as such, where a water jet is directed to the downwards proceeding gas flow. Owing to the water jet, part of the solids contained in the carbon monoxide gas are removed along the water flow to the lower part of the scrubber, whereas the gas is made to flow upwards, towards the gas discharge aperture. Depending on the gas pressure of the carbon monoxide gas flowing out of the scrubber, the carbon monoxide gas is conducted either directly to the filtering unit or first to a gas blower, in which the carbon monoxide gas pressure can be increased by blasting before entering the filtering unit. The use of a blower is significant at least when the pressure of the gas emitted from the scrubber is insufficient with respect to the pressure loss taking place in the filtering unit.

Through the inlet aperture of the filtering chamber of the filtering unit, the carbon monoxide gas to be filtered flows towards the filtering elements provided in the filtering chamber, in which case the solid material contained in the gas is stopped on the surface of the filtering element, and the cleaned gas in itself flows further through the filtering elements. For cleaning the filtering elements, they are subjected to nitrogen gas blasting, the duration, pressure and periodic frequency is adjusted by a control unit. Through nozzles installed in the filtering unit, water is fed in the filtering unit for conducting the solid material detached from the filtering elements to the lower part of the filtering unit. Essentially simultaneously with the starting of the water feed, there is opened, in the flowing direction of the discharge aperture provided in the lower part of the filtering chamber, the first blocking element for discharging the slurry, formed of water and the solids removed from the filtering elements, from the filtering chamber to the solids discharge chamber. When the feeding of water is stopped, the first blocking element in the flowing direction of the discharge aperture used for removing slurry is closed

For conducting the slurry contained in the discharge chamber away from the discharge chamber, the second blocking element provided in the flowing direction of the discharge aperture used for removing slurry is opened, and the slurry is allowed to flow to the part of the discharge conduit that is located after the discharge chamber. The discharge conduit is advantageously designed so that the slurry flows through a water seal created in the discharge conduit and therethrough to further processing. Thus the carbon monoxide gas possibly carried along with the slurry can be removed before the slurry proceeds to the surrounding free space after the discharge conduit.

Because the process gas filtered according the method and apparatus of the invention is carbon monoxide gas, that already in small contents is very dangerous to life, it is important, that during filtering of carbon monoxide gas the access of the gas is prevented to the surrounding free space.

When using the apparatus according to the invention, the solid content in the carbon monoxide gas after filtering is less than 5 mg/Nm³, preferably less than 1 mg/Nm³.

The invention is explained in more detail below, with reference to the appended drawings, where
Fig. 1 illustrates a filtering unit according to the invention in a partly cross-sectional side-view illustration, and
Fig. 2 illustrates a flowsheet connected to the filtering unit according to the invention.

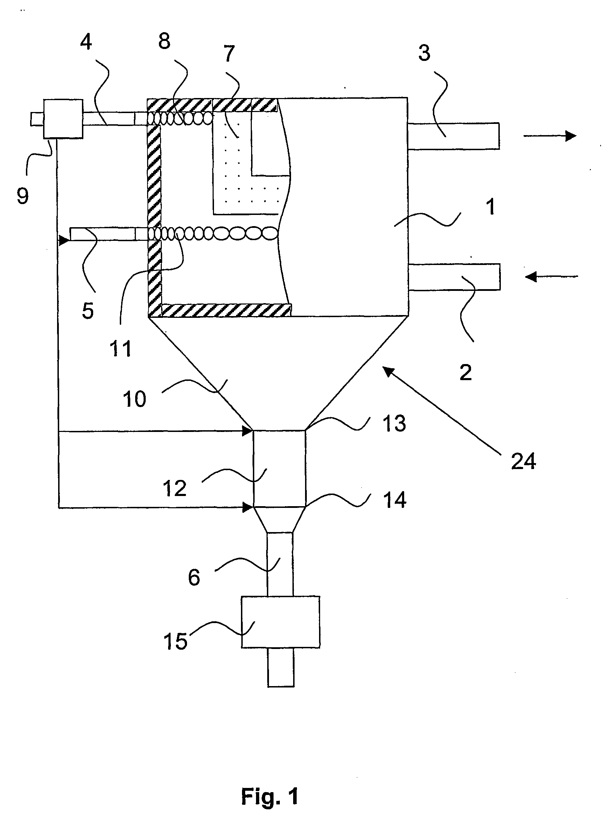

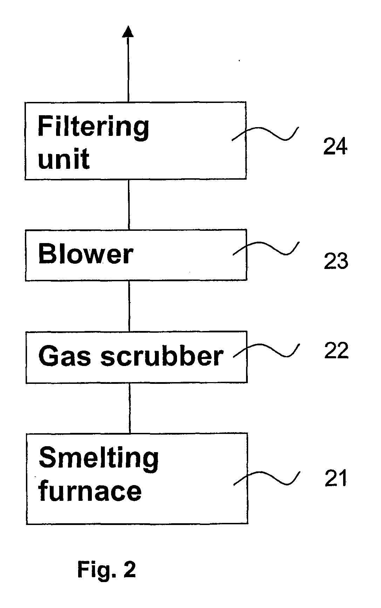

According to Figs 1 and 2, to the filtering chamber 1 of the filtering unit, there are connected conduits for the input 2 and outlet 3 of the carbon monoxide gas to be treated in the filtering unit. Likewise, to the filtering chamber 1, there are connected conduits for feeding inert gas 4, for feeding water 5 and for removing 6 the solids separated from the gas.

The carbon monoxide gas flowing to the filtering chamber 1 is conducted through the inlet aperture of the conduit 2 to a filtering element 7 that is made of finely ground polyethylene by heat treatment, and through which the carbon monoxide gas has access to flow. After flowing through the filtering element 7, the carbon monoxide gas is conducted through the outlet aperture of the conduit 3 to be utilized further. The solids that were contained in the carbon monoxide gas remain on the surface of the filtering element 7, to which there is directed nitrogen gas periodically in continuous operation through gas nozzles 8 connected to the conduit 4. The nitrogen gas blast is controlled by a control unit 9 connected to the conduit 4. The solids removed by the nitrogen gas are lowered down towards the bottom part 10 of the filtering chamber 1, and in order to facilitate the removal of solids, water is conducted to the filtering chamber 1 through a conduit 5 and directed, by nozzles 11 connected to the conduit 5, at least partly onto the filtering chamber walls. Thus the slurry formed of solids and water flows towards the bottom of the bottom part 10, which is provided with a blocking element 13. The blocking element 13 is used for adjusting the flowing of the slurry to a discharge chamber 12 provided underneath the bottom part 10. By means of the discharge chamber 12, the carbon monoxide gas possibly carried along with the slurry is prevented from flowing out of the filtering unit 1 to the surroundings, so that the discharge chamber 12 is provided with a blocking element 14 also at the other end with respect to the slurry flowing direction. The operation of the blocking elements 13 and 14 is adjusted by means of the control unit 9, so that only one of the blocking elements 13 or 14 is in turn in the open position, while the other is in the closed position. The slurry discharged from the discharge chamber 12 is conducted to a discharge conduit 6 provided with a water seal 15 to ensure that the carbon monoxide has no access to flow to the surroundings, in case the mutual operation of the blocking elements 13 and 14 should be disturbed, for example. The control unit 9 is also used for controlling the use of the water nozzles 11.

According to the flowsheet of the carbon monoxide gas illustrated in Fig. 2, the carbon monoxide gas obtained from the smelting furnace 21 is first conducted to a gas scrubber 22, where part of the solids contained in the gas is removed when necessary. In order to ensure a sufficient pressure for the carbon monoxide gas, the gas is conducted to the filtering chamber 1 of the filtering unit 24 through a blower 23.

## Claims

1. A method for filtering a solids containing process gas, i.e. carbon monoxide gas, created in a ferroalloy smelting process in order to reduce the content of solids in the process gas, in which method the process gas is conducted to at least one gas filtering unit (24) including a filtering chamber (1), wherein in the filtering chamber (1) said gas containing solids is conducted through at least one filtering element (7), to which there is directed an inert gas to the filtering element (7) from the inlet side for process gas periodically in continuous operation in order to detach the solid material from the surface of the filtering element (7), wherein in order to remove the solid material detached from the surface of the filtering element (7) the solid material is slurried by means of liquid fed (11) into the filtering unit (24) and that the slurry containing the solid material is removed from the filtering unit (24) through a blocking element (13) into a discharge chamber (12) being further provided with a blocking element (14) at its other end with respect to the slurry flowing direction, wherein only one of the blocking elements(13, 14) is in open position, while the other is in the closed position.

2. Method according to the claim 1, **characterized in that** the process gas before being fed to the filtering unit (24) is conducted through a gas scrubber (22).

3. Method according to the claim 1 or 2, **characterized in that** the process gas is conducted into the filtering unit (24) periodically in continuous operation.

4. Method according to any of the preceding claims, **characterized in that** the slurry containing solid material is conducted away from the filtering unit (24) through a liquid seal.

5. Method according to any of the preceding claims, **characterized in that** solid content in the carbon monoxide gas after filtering (24) is less than 5 mg/Nm³, preferably less than 1 mg/Nm³.

6. An apparatus for filtering a solids containing process gas, i.e. carbon monoxide gas, created in a ferroalloy smelting process in order to reduce the content of solids in the process gas, the apparatus comprising a filtering chamber (1) having an inlet aperture for the process gas to be filtered flowing towards at least one filtering element (7), a conduit (4) adapted to direct inert gas blowing to the at least one filtering element (7) from the inlet side for process gas so as to remove the solids stuck on the surface of the at least one filtering element (7),
a conduit (5) adapted to feed liquid into the filtering chamber (1) so as to form a slurry of the liquid medium and the solids detached from the surface of the at least one filtering element (7),
a bottom part (10) coupled to the filtering chamber (1) being adapted to remove the slurry containing the solid material from the filtering chamber (1), **characterized in that** a discharge chamber (12) is provided being provided at the inlet aperture with a blocking element (13) and with a second blocking element (14) at a distance from the first blocking element (13) the space left in between the blocking elements in the discharge conduit (6) constituting the solids discharge chamber (12) being connected to a discharge conduit (6).

7. An apparatus according to claim 6, **characterized in that** a gas scrubber (22) is installed prior to the filtering unit (24) in the gas flowing direction.

8. An apparatus according to claims 6 or 7, **characterized in that** the solids discharge chamber (12) forms part of the discharge conduit (6) connected to the filtering chamber (1).

9. An apparatus according to claims 6 to 8, **characterized in that** the solids discharge chamber (12) is installed as a separate element in between the filtering chamber (1) and the discharge conduit (6).

10. An apparatus according to any of the preceding claims 6 - 9, **characterized in that** the discharge conduit (6) is provided with a liquid seal (15).

11. An apparatus according to any of the preceding claims 6 - 10, **characterized in that** the discharge conduit (6) is connected to an element that is provided with a liquid seal (15).

12. An apparatus according to any of the preceding claims 6 - 11, **characterized in that** the filtering chamber (1) is provided with at least one nozzle (8) for feeding the inert gas to the filtering chamber (1).

13. An apparatus according to any of the preceding claims 6 - 12, **characterized in that** the filtering chamber (1) is provided with at least one nozzle (11) for feeding the liquid medium to the filtering chamber (1).

## Patentansprüche

1. Verfahren zum Filtern eines Feststoffe enthaltenden Prozessgases, d.h. Kohlenmonoxid-Gas, das in einem Ferrolegierungs-Schmelzprozess entsteht, um den Gehalt an Feststoffen in dem Prozessgas zu reduzieren, bei welchem Verfahren das Prozessgas an mindestens eine Gasfiltereinheit (24) mit einer Filterkammer (1) geführt wird, wobei in der Filterkammer (1) das die Feststoffe enthaltende Gas durch mindestens ein Filterelement (7) geführt wird, auf das ein inertes Gas auf das Filterelement (7) von der Einlassseite für Prozessgas periodisch in kontinuierlichem Betrieb gerichtet ist, um das Feststoffmaterial von der Oberfläche des Filterelementes (7) abzulösen, wobei, um das von der Oberfläche des Filterelementes (7) abgelöste Feststoffmaterial zu entfernen, das Feststoffmaterial mit Hilfe einer Flüssigkeitszufuhr (11) in die Filtereinheit (24) aufgeschlämmt wird, und die das Feststoffmaterial enthaltende Aufschlämmung von der Filtereinheit (24) durch ein Sperrelement (13) in eine Abgabekammer (12) abgegeben wird, die ferner mit einem Sperrelement (14) an ihrem anderen Ende mit Bezug auf die Strömungsrichtung der Aufschlämmung versehen ist, wobei nur eines der Sperrelemente (13, 14) in einer Offenstellung ist, während das andere in der Geschlossenstellung vorliegt.

2. Verfahren nach Anspruch 1, **dadurch gekennzeichnet, dass** das Prozessgas vor einem Zuführen zur Filtereinheit (24) durch einen Gaswäscher (22) geführt wird.

3. Verfahren nach Anspruch 1 oder 2, **dadurch gekennzeichnet, dass** das Prozessgas periodisch in kontinuierlichem Betrieb in die Filtereinheit (24) geführt wird.

4. Verfahren nach einem der vorangehenden Ansprüche, **dadurch gekennzeichnet, dass** die das Feststoffmaterial enthaltende Aufschlämmung von der Filtereinheit (24) durch eine Flüssigkeits-Abdichtung abgeführt wird.

5. Verfahren nach einem der vorangehenden Ansprüche, **dadurch gekennzeichnet, dass** das Feststoffgehalt in dem Kohlenstoffmonoxid-Gas nach einem Filtern (24) weniger als 5 mg/Nm³, vorzugsweise wenig als 1 mg/Nm³ beträgt.

6. Vorrichtung zum Filtern eines Feststoffe enthaltenden Prozessgases, d.h. Kohlenstoffmonoxid-Gas, das in einem Ferrolegierungs-Schmelzprozess entsteht, um den Gehalt an Feststoffen in dem Prozessgas zu reduzieren, wobei die Vorrichtung eine Filterkammer (1) mit einer Einlassöffnung für das zu filternde Prozessgas aufweist, das in Richtung von zumindest einem Filterelement (7) strömt, ferner mit einer Leitung (4), die dazu bestimmt ist, inertes Gas auf das mindestens eine Filterelement (7) von der Einlassseite für Prozessgas zu blasen, um so die auf der Oberfläche steckende Feststoffansammlung des mindestens einen Filterelements (7) zu entfernen,
eine Leitung (5), die dazu bestimmt ist, Flüssigkeit in die Filterkammer (1) zu führen, um so eine Aufschlämmung des Flüssigkeitsmediums mit den von der Oberfläche des mindestens einen Filterelements (7) abgelösten Feststoffe zu bilden,
ein Bodenteil (10), das an der Filterkammer (1) angekoppelt und dazu bestimmt ist, die das Feststoffmaterial enthaltende Aufschlämmung von der Filterkammer (1) zu entfernen,
**dadurch gekennzeichnet, dass** eine Abgabekammer (12) vorgesehen ist, die an der Einlassöffnung mit einem Sperrelement (13) und mit einem zweiten Sperrelement (14) in einem Abstand von dem ersten Sperrelement (13) versehen ist, wobei der zwischen den Sperrelementen in der Abgabeleitung (6) verbleibende Raum die Feststofifi-Abgabekammer (12) bildet, die an eine Abgabeleitung (6) angeschlossen ist.

7. Vorrichtung nach Anspruch 6, **dadurch gekennzeichnet, dass** ein Gaswäscher (22) vor der Filtereinheit (24) in der Gasströmungsrichtung installiert ist.

8. Vorrichtung nach Anspruch 6 oder 7, **dadurch gekennzeichnet, dass** die Feststofif-Abgabekammer (12) einen Teil der Abgabeleitung (6) bildet, die an der Filterkammer (1) angeschlossen ist.

9. Vorrichtung nach einem der Ansprüche 6 bis 8, **dadurch gekennzeichnet, dass** die Feststoff-Abgabekammer (12) als ein separates Element zwischen der Filterkammer (1) und der Abgabeleitung (6) installiert ist.

10. Vorrichtung nach einem der vorangehenden Ansprüche 6 bis 9, **dadurch gekennzeichnet, dass** die Abgabeleitung (6) mit einer Flüssigkeitsdichtung (15) versehen ist.

11. Vorrichtung nach einem der vorangehenden Ansprüche 6 bis 10, **dadurch gekennzeichnet, dass** die Abgabeleitung (6) an ein Element angeschlossen ist, das mit einer Flüssigkeitsdichtung (15) versehen ist.

12. Vorrichtung nach einem der vorangehenden Ansprüche 6 bis 11, **dadurch gekennzeichnet, dass** die Filterkammer (1) mit mindestens einer Düse (8) zum Zuführen des inerten Gases an die Filterkammer (1) versehen ist.

13. Vorrichtung nach einem der vorangehenden Ansprüche 6 bis 12, **dadurch kennzeichnet, dass** die Filterkammer (1) mit mindestens einer Düse (11) zum Zuführen des Flüssigkeitsmediums an die Filterkammer (1) versehen ist.

## Revendications

1. Procédé de filtration d'un gaz de traitement contenant des matières solides, à savoir le monoxyde de carbone gazeux, créé dans un procédé de fusion de ferroalliage afin de réduire la teneur en matières solides dans le gaz de traitement, dans lequel procédé le gaz de traitement est conduit vers au moins une unité de filtration de gaz (24) comprenant une chambre de filtration (1), dans lequel dans la chambre de filtration (1) ledit gaz contenant des matières solides est conduit à travers au moins un élément filtrant (7), sur lequel élément filtrant (7) est dirigé un gaz inerte depuis le côté d'entrée pour le gaz de traitement périodiquement en fonctionnement continu afin de détacher les matières solides de la surface de l'élément filtrant (7), dans lequel, afin de retirer les matières solides détachées de la surface de l'élément filtrant (7), les matières solides sont mises en bouillie au moyen d'un liquide (11) introduit dans l'unité de filtration (24) et la bouillie contenant les matières solides est retirée de l'unité de filtration (24) à travers un élément de blocage (13) vers une chambre de décharge (12) étant en outre pourvue d'un élément de blocage (14) à son autre extrémité par rapport à la direction d'écoulement de la bouillie, dans lequel seulement l'un des éléments de blocage (13, 14) est en position ouverte, pendant que l'autre est en position fermée.

2. Procédé selon la revendication 1, **caractérisé par le fait que** le gaz de traitement, avant d'être introduit dans l'unité de filtration (24), est conduit à travers un épurateur de gaz (22).

3. Procédé selon la revendication 1 ou 2, **caractérisé par le fait que** le gaz de traitement est conduit dans l'unité de filtration (24) périodiquement en fonctionnement continu.

4. Procédé selon l'une quelconque des revendications précédentes, **caractérisé par le fait que** la bouillie contenant des matières solides est conduite hors de l'unité de filtration (24) à travers un joint liquide.

5. Procédé selon l'une quelconque des revendications précédentes, **caractérisé par le fait que** la teneur en matières solides dans le monoxyde de carbone gazeux après filtration (24) est inférieure à 5 mg/Nm³, préférentiellement inférieure à 1 mg/Nm³.

6. Appareil de filtration d'un gaz de traitement contenant des matières solides, à savoir le monoxyde de carbone gazeux, créé dans le procédé de fusion de ferroalliage, afin de réduire la teneur en matières solides dans le gaz de traitement, l'appareil comprenant une chambre de filtration (1) ayant une ouverture d'entrée pour le gaz de traitement à filtrer s'écoulant vers au moins un élément filtrant (7),
un conduit (4) adapté pour diriger une insufflation de gaz inerte vers l'au moins un élément filtrant (7) depuis le côté entrée pour le gaz de traitement de manière à retirer les matières solides collées sur la surface de l'au moins un élément filtrant (7),
un conduit (5) adapté pour introduire du liquide dans la chambre de filtration (1) de manière à former une bouillie du milieu liquide et des matières solides détachées de la surface de l'au moins un élément filtrant (7),
une partie inférieure (10) couplée avec la chambre de filtration (1) étant adaptée pour retirer la bouillie contenant les matières solides de la chambre de filtration (1), **caractérisé par le fait qu'**une chambre de décharge (12) est fournie, pourvue au niveau de l'ouverture d'entrée d'un élément de blocage (13) et d'un second élément de blocage (14) à une certaine distance du premier élément de blocage (13), l'espace laissé entre les éléments de blocage dans le conduit de décharge (6) constituant la chambre de décharge des matières solides (12) étant reliée à un conduit de décharge (6).

7. Appareil selon la revendication 6, **caractérisé par le fait qu'**un épurateur de gaz (22) est installé en amont de l'unité de filtration (24) dans la direction d'écoulement du gaz.

8. Appareil selon la revendication 6 ou 7, **caractérisé par le fait que** la chambre de décharge de matières solides (12) forme une partie du conduit de décharge (6) relié à la chambre de filtration (1).

9. Appareil selon la revendication 6 à 8, **caractérisé par le fait que** la chambre de décharge de matières solides (12) est installée comme un élément séparé entre la chambre de filtration (1) et le conduit de décharge (6).

10. Appareil selon l'une quelconque des revendications 6 à 9, **caractérisé par le fait que** le conduit de décharge (6) est pourvu d'un joint liquide (15).

11. Appareil selon l'une quelconque des revendications 6 à 10, **caractérisé par le fait que** le conduit de décharge (6) est relié à un élément qui est pourvu d'un joint liquide (15).

12. Appareil selon l'une quelconque des revendications 6 à 11, **caractérisé par le fait que** la chambre de filtration (1) est pourvue d'au moins une buse (8) pour introduire le gaz inerte dans la chambre de filtration (1).

13. Appareil selon l'une quelconque des revendications 6 à 12, **caractérisé par le fait que** la chambre de filtration (1) est pourvue d'au moins une buse (11) pour introduire le milieu liquide dans la chambre de filtration (1).
